# EUROPÄISCHE PATENTSCHRIFT

(11) **EP 2 988 858 B1**
(45) Veröffentlichungstag und Bekanntmachung des Hinweises auf die Patenterteilung: **13.12.2017**
(21) Anmeldenummer: 14707385.2
(22) Anmeldetag: 28.02.2014
(51) Int. Cl.: B01J 12/00, C01B 33/04, C07F 7/02, B01J 19/24

(54) **VERFAHREN UND VORRICHTUNG ZUR HERSTELLUNG VON SILANEN**
METHOD AND APPARATUS FOR THE PREPARATION OF SILANES
PROCEDE ET DISPOSITIF DE PRODUCTION DE SILANES

(30) Priorität: 24.04.2013 DE 102013207442
(43) Veröffentlichungstag der Anmeldung: 02.03.2016
(73) Patentinhaber: Evonik Degussa GmbH, 45128 Essen (DE)
(72) Erfinder: LANG, Jürgen Erwin, 76229 Karlsruhe (DE); RAULEDER, Hartwig, 79618 Rheinfelden (DE); MÜH, Ekkehard, 79618 Rheinfelden (DE)
(86) Internationale Anmeldenummer: PCT/EP2014/053920
(87) Internationale Veröffentlichungsnummer: WO 2014/173567

(56) Entgegenhaltungen:
- EP-A2- 0 268 756
- FR-A1- 2 743 554
- US-A- 4 604 274
- US-A- 5 505 913

## Beschreibung

Die Erfindung betrifft ein Verfahren zur Herstellung von dimeren und/oder trimeren Silanen durch Umsetzung von Monosilan mit Wasserstoff in einem Plasma, sowie eine Anlage zur Durchführung dieses Verfahrens.

In der Mikroelektronik wird Disilan zur Abscheidung von Silizium-Schichten eingesetzt, das allerhöchsten Reinheitsanforderungen genügen muss. Bislang sind jedoch nur Verfahren bekannt, bei denen Katalysatoren zum Einsatz kommen. So offenbart die JP 02-184513 ein Verfahren zur Herstellung von Disilan unter Verwendung von metallorganischen Katalysatoren basierend auf Platin, Rhodium oder Ruthenium-Komplexkatalysatoren mit organischen Phosphor-, Arsen- oder Antimonliganden. Diese Katalysatoren tragen zu einer Kontamination im ppb-Bereich des hergestellten Disilans bei und werden zunehmend kritisch bei Ihrer Entsorgung beurteilt.

Die WO 2008/098640 A2 offenbart ein Verfahren zur Herstellung von Hexachlordisilan, das in einem zweiten Verfahrensschritt katalytisch zu Disilan hydriert werden kann. Dieses zweistufige Verfahren ist nicht für die kostengünstige Herstellung von hochreinem Disilan geeignet.

Die Patentanmeldung EP 0268756 A2 stellt ein Verfahren zur Herstellung von Disilan aus Monosilan vor, bei dem ein Gemisch aus Monosilan und Wasserstoff einer Plasmaentladung bevorzugt im Radiofrequenzbereich ausgesetzt wird. Die Abtrennung des Produktes erfolgt durch Ausfrieren.

Ein mehrstufiges Verfahren zur kontinuierlichen Erzeugung von Disilan, das ebenfalls wenigstens einen kryogenischen Schritt erfordert, wird in FR 2743554 A1 vorgeschlagen.

Der Patentschrift US 4604274 A entnimmt man ein Verfahren zur Umwandlung von Silan in Disilan durch gepulste Bestrahlung mit kohärentem Licht. Die Einhaltung von Drücken oberhalb 75 Torr ist hierbei ein kritischer Verfahrensschritt.

US 5505913 A offenbart die diskontinuierliche Herstellung von Disilan aus Monosilan in einem Reaktor durch Anwendung einer elektrischen Hochfrequenzentladung. Das Produkt wird dadurch erhalten, indem nach dem Abbruch der Entladung das Gasgemisch mit den Umwandlungsprodukten aus den Reaktor herausgeführt und dieser mit Helium gespült wird.

Aus der DE 36 39 202 ist ein weiteres Verfahren zur Herstellung von Disilan mit dem Nachteil einer Bildung von signifikanten Mengen an elementarem Silizium während der Herstellung von Disilan bekannt. Der Reaktor kann in diesem Verfahren nur diskontinuierlich betrieben werden und muss nach sehr kurzen Produktionszeiten aufwendig gereinigt werden. Ein weiterer Nachteil besteht in den hohen Ausbeuteverlusten, die einerseits durch die Siliziumabscheidung und anderseits durch Verluste an Disilan oder Trisilan aufgrund von Strippeffekten bei der Abtrennung von Wasserstoff aus den Reaktionsprodukten entstehen. Diese Ausbeuteverluste können zwar bei einer Synthese über Hexachlordisilan vermieden werden, jedoch kommt es durch die katalytische Hydrierung wiederum zu einer Kontamination des Disilans und Trisilans.

Aufgabe der vorliegenden Erfindung war die Bereitstellung eines Verfahrens und einer Anlage, die die genannten Nachteile des Standes der Technik vermeidet und vorzugsweise eine kontinuierliche sowie bevorzugt selektive Herstellung von Disilan und/oder Trisilan erlaubt. Ferner sollen Disilan und/oder Trisilan in hoher- bis höchster Reinheit isoliert werden können. Zudem bestand die Aufgabe ein besonders wirtschaftliches Verfahren im technischen Maßstab bereitzustellen.

Gelöst werden die Aufgaben durch das erfindungsgemäße Verfahren sowie durch die erfindungsgemäße Anlage gemäß den Merkmalen der Patentansprüche 1 und 10.

Überraschend wurde festgestellt, dass eine Gasphasenbehandlung eines Eduktstoffstroms umfassend Monosilan bei gegebenem Partialdruck des Monosilans im Gasgemisch in Gegenwart von Wasserstoff in einem nicht-thermischen Plasma bei Temperaturen unter 190 °C und vorzugsweise vermindertem Druck selektiv zur Bildung von Disilan und/oder Trisilan führt.

Gegenstand der Erfindung ist somit ein Verfahren zur Herstellung von dimeren und/oder trimeren Silanen der allgemeinen Formel I mit n = 0 oder 1, indem 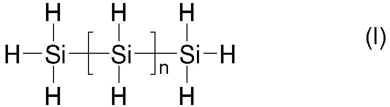
i) ein Eduktstoffstrom umfassend Monosilan der allgemeinen Formel II und Wasserstoff, wobei der Eduktstrom ein definiertes Verhältnis an Wasserstoff und Monosilan in Volumenprozent (Vol.-%) von 15 : 1 bis 1 : 5 aufweist, 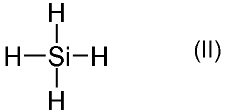
ii) einer Gasentladung ausgesetzt wird,
   vorzugsweise bei einem Druck zwischen 0,05 mbar_{abs.}. bis 15000 mbar_{abs.}, bevorzugt bei vermindertem Druck, und besonders bevorzugt entspricht die Gasentladung einem nicht-thermischen Plasma, und
iii) in der resultierenden Phase ein definiertes Verhältnis des Wasserstoffpartialdrucks zum Partialdruck der unter den gewählten Bedingungen gasförmigen Silane mittels einer Wasserstoff durchlässigen Membran eingestellt wird, und
   dimere und/oder trimere Silane der Formel I aus der resultierenden Phase gewonnen werden.

Vorzugsweise werden in Schritt iii) zunächst die dimeren und/oder trimeren Silane der Formel I gewonnen, die in einem Gemisch mit höhermolekularen Silanen enthalten sein können. Anschließend kann in der resultierenden Phase ein definiertes Verhältnis des Wasserstoffpartialdrucks zum Partialdruck der unter den gewählten Bedingungen gasförmigen Silane, insbesondere des Monosilans, eingestellt werden.

Die Einstellung der Partialdrücke geschieht erfindungsgemäß mittels einer Wasserstoff durchlässigen Membran, die vorzugsweise nur für Wasserstoff und im Wesentlichen nicht für Silane permeabel ist. Alternativ ist es ebenfalls besonders bevorzugt, wenn in Schritt iii) in der resultierenden Phase gleichzeitig die dimeren und/oder trimeren Silane der Formel I gewonnen werden und ein definiertes Verhältnis des Wasserstoffpartialdrucks zum Partialdruck der unter den gewählten Bedingungen gasförmigen Silane, insbesondere des Monosilans, eingestellt wird.

Ein Verfahren zur Herstellung von dimeren und/oder trimeren Silanen der allgemeinen Formel I, mit n = 0 oder 1, kann dadurch gekennzeichnet sein, dass i) ein Eduktstoffstrom umfassend Monosilan der allgemeinen Formel II und Wasserstoff, insbesondere mit definiertem Monosilanpartialdruck im Gasgemisch, ii) einem nicht-thermischen Plasma bei einem Druck zwischen 0,1 mbar_{abs.} bis 1000 mbar_{abs.} ausgesetzt wird, bevorzugt bei einem Druck zwischen 1 mbar_{abs.} bis 950 mbar_{abs.}, und iii) in der resultierenden Phase ein definiertes Verhältnis des Wasserstoffpartialdrucks zum Partialdruck der unter den gewählten Bedingungen gasförmigen Silane, insbesondere zum Partialdruck des Monosilans, eingestellt wird, und dimerer und/oder trimerer Silane der Formel I gewonnen werden, wobei der Druck im Verfahrensschritt iii) gegenüber dem Druck in der Verfahrensstufe ii) erhöht ist.

Als Edukte werden hoch- bis höchstreines Monosilan und Wasserstoff eingesetzt, die vorzugsweise jeweils dem folgenden Verunreinigungsprofil entsprechen. Als Gesamtverunreinigung weist das Monosilan oder der Wasserstoff von 100 Gew.-ppm bis 1 Gew.-ppt auf, insbesondere bis zur Nachweisgrenze, bevorzugt kleiner gleich 50 Gew.-ppm, weiter bevorzugt kleiner gleich 25 Gew.-ppm. Die Gesamtverunreinigung umfasst dabei eine Verunreinigung mit Bor, Phosphor und metallischen Elementen, die nicht Silizium entsprechen. Besonders bevorzugt ist die Gesamtverunreinigung jeweils unabhängig für das Monosilan und den Wasserstoff für die nachfolgend genannten Elemente.
a. Aluminium kleiner gleich 15 Gew.-ppm bis 0,0001 Gew.-ppt, und/oder
b. Bor kleiner gleich 5 bis 0,0001 Gew.-ppt, bevorzugt im Bereich von 3 Gew.-ppm bis 0,0001 Gew.-ppt, und/oder
c. Calcium kleiner gleich 2 Gew.-ppm, bevorzugt von 2 Gew.-ppm bis 0,0001 Gew.-ppt, und/oder
d. Eisen kleiner gleich 5 Gew.-ppm und 0,0001 Gew.-ppt, vorzugsweise von 0,6 Gew.-ppm bis 0,0001 Gew.-ppt, und/oder
e. Nickel kleiner gleich 5 Gew.-ppm und 0,0001 Gew.-ppt, vorzugsweise von 0,5 Gew.-ppm bis 0,0001 Gew.-ppt, und/oder
f. Phosphor kleiner gleich 5 Gew.-ppm bis 0,0001 Gew.-ppt, vorzugsweise kleiner 3 Gew.-ppm bis 0,0001 Gew.-ppt, und/oder
g. Titan kleiner gleich 10 Gew.-ppm, kleiner gleich 2 Gew.-ppm, bevorzugt kleiner gleich 1 Gew.-ppm bis 0,0001 Gew.-ppt, weiter bevorzugt von 0,6 Gew.-ppm bis 0,0001 Gew.-ppt, besonders bevorzugt von 0,1 Gew.-ppm bis 0,0001 Gew.-ppt, und/oder
h. Zink kleiner gleich 3 Gew.-ppm, bevorzugt kleiner gleich 1 Gew.-ppm bis 0,0001 Gew.-ppt, besonders bevorzugt von 0,3 Gew.-ppm bis 0,0001 Gew.-ppt,
i. Kohlenstoff und Halogene zusammen in einer Konzentration, die zu der Summe der Konzentrationen a. bis h. addiert wird. Der so erhaltene Wert ist von 1000 Gew.-ppm bis 1 Gew.-ppt, bevorzugt von 100 Gew.-ppm bis 1 Gew.-ppt.

Vorzugsweise ist die Konzentration jeder Verunreinigung a. bis h. im Bereich der dem Fachmann bekannten Nachweisgrenze vorzugsweise der der GD-MS-Analysenmethode.

Es wurde gefunden, dass bei einem gegebenen Eduktstoffstrom mit definiertem Verhältnis an Wasserstoff und Silan, ausgedrückt in Volumenprozent (Vol.-%), von 15 : 1 bis 1 : 5, bevorzugt zwischen 10 : 1 bis 5 : 1, besonders bevorzugt zwischen 10 : 1 bis 8 : 1, weiter bevorzugt bei etwa 90 Vol.-% Wasserstoff und 10 Vol.-% Monosilan, die besten Ausbeuten an Disilan und Trisilan erhalten werden, wenn der Druck im Gasentladungsreaktor zwischen 10 bis 60 mbar_{abs.} beträgt. So konnten für einen Eduktstoffstrom von 90 Vol.-% Wasserstoff und 10 Vol.-% Monosilan im nicht-thermischen Plasma bei einem Druck von 10 mbar_{abs.} 0,7 g/h Disilan bei kontinuierlicher Betriebsweise erhalten werden, und bei 20 mbar_{abs.} bereits 0,75 g/h bzw. bei 25 mbar_{abs.} 0,72 g/h. Eine sehr hohe Ausbeute von 0,85 g/h Disilan kann bei 50 mbar_{abs.} isoliert werden. Wird der Druck leicht weiter erhöht, kann die Ausbeute weiter gesteigert werden. Zur optimalen Durchführung des Verfahrens wird der Eduktstoffstrom bevorzugt in Schritt ii) bei einem Druck zwischen 5 mbar_{abs.} bis 100 bar_{abs.}, besonders bevorzugt zwischen 7,5 mbar_{abs.} bis 100 mbar_{abs.}, weiter bevorzugt zwischen 10 mbar_{abs.} bis 80 mbar_{abs.} einer Gasentladung, bevorzugt einem nichtthermischen Plasma bei einer Temperatur zwischen - 60 °C und 10 °C ausgesetzt, insbesondere bei -40 bis 0 °C, weiter bevorzugt um -10 °C plus/minus 5 °C.

Ebenso ist es bevorzugt, wenn im Verfahrensschritt ii) die Gasentladung bei einem Druck zwischen 0,1 mbar_{abs.} bis 1000 mbar_{abs.} erfolgt, bevorzugt zwischen 0,1 und 800 mbar_{abs.}, besonders bevorzugt zwischen 1 mbar_{abs.} bis 100 mbar_{abs.}, weiter bevorzugt ist ein Druckbereich zwischen 10 bis 100 mbar_{abs.}, vorzugsweise zwischen 10 bis 80 mbar_{abs} betrieben wird. Dabei ist es weiter bevorzugt, wenn die Gasentladung, insbesondere das nicht-thermische Plasma, im Schritt ii) bei einer Temperatur zwischen -60 °C und 10 °C betrieben wird. Werden die bevorzugten Druck- und Temperaturbereiche während der Plasmabehandlung des Eduktstoffstroms eingehalten, kann selektiv die Si-H-Bindung so weit angeregt werden, dass es zur Silylradikalbildung und anschließend zur Dimerisierung von Silylradikalen kommt. Zur selektiven Silylradikalbildung durch Anregung und Spaltung der Si-H-Bindung wird eine mittlere Elektronenenergie von 5 eV im schwach ionisierenden nicht-thermischen Plasma benötigt. Für einen weiteren Kettenaufbau findet vermutlich eine Insertion von SiH₂-Radialen in Si-H oder Si-Si-Bindungen von Disilanen statt. Bei zu hohem Energieeintrag im Bereich von 12,3 eV würden statt einer selektiven Radikalbildung unerwünschte SiH₃⁺-Ionen gebildet, die bei weiterem Zerfall zur Abscheidung von Silizium führen. Für hohe Ausbeuten an Disilan und Trisilan ist es daher entscheidend, die Prozessbedingungen im nicht-thermischen Plasma optimal auf eine selektive Radikalbildung und die Möglichkeiten einer Rekombination zu höheren Silanen einzustellen und zugleich die Bildung weiterer Zerfallsprodukte zu unterbinden.

Das dabei gebildete Disilan und/oder Trisilan kann anschließend über eine geeignete Temperatur- und Druckeinstellung, insbesondere im Schritt iv) auskondensiert werden, indem der Druck mittels eines Verdichters auf einen Druck über 0,1 bar_{abs.} bis 100 bar_{abs.}, insbesondere 1 bar_{abs.} bis 100 bar_{abs.}, vorzugsweise auf 1 bis 10 bar_{abs.}, in einem Temperaturbereich von -60 °C bis 20 °C eingestellt wird. Zur vollständigen Abtrennung wird bevorzugt eine zweistufige Verfahrensweise angewendet, in der in einem ersten Teilschritt iv.a) am Kondensator eine Temperatur im Bereich von -20 bis 10 °C bei einem Druck zwischen 0,1 bis 10 bar_{abs.} eingestellt wird, insbesondere zwischen 1 bis 5 bar_{abs.}, und nachfolgend iv.b) im Rohproduktbehälter oder Rohproduktablass bei vorzugsweis gleichem Druck bei -60 bis - 20 °C die vollständige Abtrennung durch Kondensation des Disilans und/oder Trisilans aus der resultierenden Phase erfolgt. Diese resultierende Phase wird mit einer für Wasserstoff permeablen Membran in Kontakt gebracht, so dass sich in ein definiertes Verhältnis des Wasserstoffpartialdrucks zum Partialdruck der unter den gewählten Bedingungen gasförmigen Silane, insbesondere des nicht umgesetzten Monosilans, einstellen kann. Die auf diese Weise behandelte resultierende Phase wird nach der teilweisen Abtrennung von Wasserstoff erneut zum Eduktstoffstrom, dem weiteres Monosilans zudosiert werden kann, bevor es dem nichtthermischen Plasma zugeführt wird.

Auf diese Weise kann nicht umgesetztes Edukt der allgemeinen Formel II nach Bedarf erneut dem nicht-thermischen Plasma zugeführt werden. Zur vollständigen Umsetzung des eingesetzten Monosilans zu Disilan und/oder Trisilan der allgemeinen Formel I wird vorzugsweise das Verfahren als Kreisprozess betrieben, indem die Verfahrensschritte i), ii) und iii) durchlaufen werden. Das mittels der Umsetzung im nicht-thermischen Plasma erhaltene Disilan und/oder Trisilan der allgemeinen Formel I kann bereits in dem Verfahren rein erhalten werden. Eine weitere Aufreinigung der Silane kann anschließend kontinuierlich oder diskontinuierlich destillativ erfolgen. Die destillative Aufarbeitung kann je nach erhaltenem Produktgemisch mit einer Kolonne oder bevorzugt in einem Mehrkolonnensystem erfolgen. Dabei ist leicht nachvollziehbar, dass Trisilan sich bevorzugt bildet, sobald Disilan erneut in den Reaktor geführt und/oder der Gasentladung durch längere Verweizeit ausgesetzt wird.

Auf diese Weise kann beispielsweise Disilan oder Trisilan in höchster Reinheit von den übrigen Reaktionsprodukten und Edukten isoliert werden. Im ²⁹Si-NMR-Spektrum sind neben dem Signal des Disilans keine weiteren Verbindungen nachweisbar. Die Verunreinigung des Disilans oder Trisilans mit anderen Metallverbindungen liegt wenigstens bei kleiner gleich 1000 Gew.-ppb bis zu unter 100 Gew.-ppt. Ein besonderer Vorteil der nach dem erfindungsgemäßen Verfahren hergestellten Silane ist, dass sie bevorzugt frei von Chloriden oder sonst üblicherweise verwendeten Katalysatorrückständen sind.

Besonders bevorzugt ist das erhaltene Disilan oder Trisilan höchstrein und weist in Summe jeweils eine Gesamtverunreinigung von kleiner gleich 100 Gew.-ppm bis zur Nachweisgrenze, insbesondere bis 1 Gew.-ppt auf, bevorzugt ist die Gesamtverunreinigung kleiner gleich 50 Gew.-ppm. Als Gesamtverunreinigung gilt eine Verunreinigung mit Bor, Phosphor und metallischen Elementen, die nicht Silizium entsprechen. Besonders bevorzugt ist die Gesamtverunreinigung des Disilans und/oder Trisilans für die nachfolgend genannten Elemente kleiner gleich:
a. Aluminium kleiner gleich 15 Gew.-ppm bis 0,0001 Gew.-ppt, und/oder
b. Bor kleiner gleich 5 bis 0,0001 Gew.-ppt, bevorzugt im Bereich von 3 Gew.-ppm bis 0,0001 Gew.-ppt und/oder
c. Calcium kleiner gleich 2 Gew.-ppm, bevorzugt zwischen 2 Gew.-ppm und 0,0001 Gew.-ppt, und/oder
d. Eisen kleiner gleich 5 Gew.-ppm und 0,0001 Gew.-ppt, insbesondere zwischen 0,6 Gew.-ppm und 0,0001 Gew.-ppt und/oder
e. Nickel kleiner gleich 5 Gew.-ppm und 0,0001 Gew.-ppt, insbesondere zwischen 0,5 Gew.-ppm und 0,0001 Gew.-ppt, und/oder
f. Phosphor kleiner gleich 5 Gew.-ppm bis 0,0001 Gew.-ppt, insbesondere kleiner 3 Gew.-ppm bis 0,0001 Gew.-ppt, und/oder
g. Titan kleiner gleich 10 Gew.-ppm, kleiner gleich 2 Gew.-ppm, bevorzugt kleiner gleich 1 Gew.-ppm bis 0,0001 Gew.-ppt, insbesondere zwischen 0,6 Gew.-ppm bis 0,0001 Gew.-ppt, bevorzugt zwischen 0,1 Gew.-ppm bis 0,0001 Gew.-ppt, und/oder
h. Zink kleiner gleich 3 Gew.-ppm, bevorzugt kleiner gleich 1 Gew.-ppm bis 0,0001 Gew.-ppt, insbesondere zwischen 0,3 Gew.-ppm bis 0,0001 Gew.-ppt,
i. Kohlenstoff und Halogene zusammen in einer Konzentration, die zu der Summe der Konzentrationen a. bis h. addiert wird. Der so erhaltene Wert ist kleiner oder gleich 100 Gew.-ppm.

Vorzugsweise ist jede Verunreinigung a. bis i. in dem Fachmann bekanntem Bereich der Nachweisgrenze konzentriert. Die Bestimmung der Gesamtverunreinigung mit den vorgenannten Elementen erfolgt vorzugsweise mittels ICP-MS. Insgesamt kann der Prozess kontinuierlich mittels einer "online-Analytik" überwacht werden. Die geforderte Reinheit kann mittels GC, IR, NMR, ICP-MS oder durch Widerstandsmessung bzw. GC-MS nach Abscheidung des Si überprüft werden.

Zusätzlich oder alternativ zu einem der vorgenannten Merkmale ist es bevorzugt, wenn im Verfahrensschritt iii) die resultierende Phase auf einen Druck von 0,05 bar_{abs}. bis 100 bar_{abs}. eingestellt wird, beispielsweise auf 0,1 bis 100 bar_{abs.}, insbesondere auf einen Druck zwischen 1 bar_{abs.} bis 100 bar_{abs.}, weiter bevorzugt ist ein Druck zwischen 0,5 oder 1 bar_{abs.} bis 60 bar_{abs.}, besonders bevorzugt ist ein Druck zwischen 1 bis 10 bar_{abs.}.

Als Wasserstoff permeable Membran kann vorzugsweise eine Membran im Verfahren und/oder in der Anlage eingesetzt werden, die die folgenden Materialien umfasst: Quarz, geeignetes Metall, geeignete metallische Legierung, Keramik, Zeolith, organisches Polymer und/oder eine Kompositmembran umfassend einen mindestens zweischichtigen Aufbau mit einem oder mehreren der vorgennannten Materialien. Um als Material für die Wasserstoff permeable Membran geeignet zu sein, ist es notwendig, dass das Material, bspw. Quarz oder Palladium, Zwischengitterplätze, Poren einer definierten Größe etc. aufweist, durch die Wasserstoff diffundieren bzw. permeieren kann und die im Wesentlichen undurchlässig für Monosilan sind. Eine bevorzugt einsetzbare Membran kann beispielsweise eine Keramikmembran mit einem Schichtaufbau umfassen, die eine erste mikroporöse Schicht mit Poren kleiner 2 nm aufweist, an die sich eine mesoporöse Schicht mit Poren zwischen 3 bis 10 nm anschließt, gegebenenfalls kann noch eine makroporöse Schicht mit großen Poren bis 100 nm vorgesehen sein. Dabei ist es bevorzugt, wenn die makroporöse Schicht ein poröses keramisches Material oder ein gesintertes Metall ist.

Geeignete Membranen können bevorzugt die folgenden Materialien umfassen: porenlose anorganische Materialien wie z. B. Tantalium, Vandium, Niobium, Aluminium, Eisen, Palladium, oder Metalllegierungen wie z. B. eine Palladiumlegierung, wie PdAl, PdCu, Metallkomposite wie Eisen-Kupfer als dünne Schichten im Bereich 10 bis 100 nm Dicke, Quarz und/oder ein organisches synthetisches Polymer, wie vorzugsweise Hohlfasermembranen, wobei die Membranen bevorzugt für Wasserstoff permeabel sein müssen. Bevorzugte Hohlfasermembranen können aus Polyamiden, Polyimiden, Polyamid-imiden oder auch aus Mischungen dieser hergestellt werden. Sofern eine Palladiummembran gewählt wird, kann sie beispielsweise durch chemische Gasphasenabscheidung, elektrochemischer Abscheidung, Hochgeschwindigkeitsflammspritzen oder physikalischer Gasphasenabscheidung, dem Sputtern oder dem sogenannten Elektronenstrahlverdampfen hergestellt werden.

Aufgrund der hohen Reinheitsanforderungen in Bezug auf eine Verunreinigung mit metallischen Elementen wird eine höchstreine Quarzmembran im Verfahren und/oder in der Anlage bevorzugt genutzt. Diese Membran sollte eine Druckstabilität größer 1 bar_{abs.}, vorzugsweise größer 2 bar_{abs.}, besonders bevorzugt größer 3 bar_{abs.} aufweisen und kann vorzugsweise auf einem porösen Si-Träger oder Aluminiumoxid-Träger aufgebracht sein. Entsprechendes gilt für Palladium basierte Membranen, die aus einer Palladium-Aluminium- oder Palladium-Kupfer-Legierung hergestellt sein können, und vorzugsweise eine Druckstabilität größer 3 bar_{abs}. auf einem porösem Si-Träger oder Aluminiumoxid-Träger aufweisen. Vorteilhaft ist eine Aluminium-Komposit-Membran, wobei die Metallschichtdicke bevorzugt unter 100 nm liegt.

Das nicht-thermische Plasma wird in einem Plasma-Reaktor erzeugt, in dem eine plasmaelektrische Stoffumwandlung induziert wird und basiert auf anisothermen Plasmen. Für diese Plasmen ist eine hohe Elektronentemperatur Te > 10⁴ K und relativ niedrige Gastemperatur TG 10³ K charakteristisch. Die für die chemischen Prozesse notwendige Aktivierungsenergie erfolgt überwiegend über Elektronenstösse (plasmaelektrische Stoffumwandlung). Typische nicht-thermische Plasmen können beispielsweise durch Glimmentladung, HF-Entladung, Hohlkathodenentladung oder Koronarentladung erzeugt werden. Der Arbeitsdruck, bei dem die erfindungsgemässe Plasmabehandlung durchgeführt wird liegt vorzugsweise zwischen 1 bis 2000 mbar_{abs.}, wobei die zu behandelnde Phase vorzugsweise auf eine Temperatur von -40 °C bis 190 °C, vorzugsweise auf eine Temperatur von -40 °C bis 10 °C eingestellt ist. Für die Definition des nichtthermischen Plasmas und der homogenen Plasmakatalyse wird auf die einschlägige Fachliteratur verwiesen, wie beispielsweise auf "Plasmatechnik: Grundlagen und Anwendungen - Eine Einführung; Autorenkollektiv, Carl Hanser Verlag, München/Wien; 1984, ISBN 3-446-13627-4".

Gleichfalls Gegenstand der Erfindung ist eine Anlage, insbesondere zur Durchführung des vorgenannten Verfahrens, die einen Reaktor zur Erzeugung einer Gasentladung aufweist, dem stromaufwärts eine Eduktzuführung und stromabwärts eine Wasserstoff durchlässige Membran zugeordnet ist, um ein definiertes Verhältnis des Wasserstoffpartialdrucks zum Partialdruck der gasförmigen Silane in der resultierenden Phase einzustellen. Die Arbeitsweise der Membran kann auch drucklos, Diffusionsgetrieben erfolgen.

Zusätzlich zu dem genannten Reaktor kann die Anlage auch einen oder mehrere weitere Reaktoren aufweisen, die in Reihe oder parallel geschaltet werden. Erfindungsgemäss ist mindestens ein Reaktor der Vorrichtung ein Ozonisator. Ein grosser Vorteil besteht in der alternativ möglichen Verwendung von handelsüblichen Ozonisatoren, so dass die Investitionskosten wesentlich gesenkt werden. Die Reaktoren der Erfindung sind zweckmässig mit Glasrohren, insbesondere mit Quarzglasrohren ausgestattet, wobei die Rohre bevorzugt parallel bzw. koaxial angeordnet und mittels Spacern aus inertem Material beabstandet sind. Als inertes Material eignet sich insbesondere Teflon, Glas sowie generell Low-K-Materialien, die eine geringe Dielektrizitätskonstante aufweisen. Als Materialien mit einer geringen Dielektrizitätskonstante gelten jene, deren Dielektrizitätskonstanten kleiner gleich 9 sind. Alternativ können die Reaktoren statt mit Glasrohen auch mit röhrenförmigen, dielektrischen Komponenten ausgestattet sein, die eine höhere Dielektrizitätskonstante mit Werten zwischen 1 und 10000, bevorzugt 1,5 bis 20, aufweisen können.

Es ist bekannt, dass die eingekoppelte Elektronenenergie für die Plasmaentladung "E" abhängig vom Produkt aus Druck "p" und Elektrodenabstand "d" (p d) ist. Für das erfindungsgemäße Verfahren liegt das Produkt aus Elektrodenabstand und Druck in der Regel im Bereich von 0,001 bis 300 mm x bar, vorzugsweise von 0,05 bis 100 mm x bar, besonders bevorzugt bei 0,08 bis 0,3 mm x bar, insbesondere bei 0,1 bis 0,2 mm x bar. Die Entladung kann mittels verschiedenartiger Wechselspannungen oder gepulster Spannungen von 1 bis 10⁶ V angeregt werden. Dabei kann der Kurvenverlauf der Spannung u. a. rechteckig, trapezförmig, gepulst oder stückweise aus einzelnen zeitlichen Verläufen zusammengesetzt sein. Besonders geeignet sind pulsförmige Anregungsspannungen, sie ermöglichen eine gleichzeitige Ausbildung der Entladung im gesamten Entladungsraum des Reaktors. Die Impulsdauer beim Pulsbetrieb richtet sich nach der Zusammensetzung, der Verweildauer und dem Druck des Eduktstoffstroms. Sie liegt bevorzugt zwischen 10 ns und 1 ms. Bevorzugte Spannungsamplituden liegen bei 10 Vp bis 100 kVp, bevorzugt 100 Vp bis 10 Vp, insbesondere bei 50 bis 5 Vp, in einem Mikrosystem. Die Frequenz der Wechselspannung kann zwischen 10 MHz und 10 ns-Impulsen (Tastverhältnis 10 : 1) bis zu niedrigen Frequenzen im Bereich von 10 bis 0,01 Hz eingestellt werden. Beispielsweise kann am Reaktor eine Wechselspannung mit einer Frequenz von 1,9 kHz und einer Amplitude von 35 kV "Peak to Peak" angelegt werden. Der Leistungseintrag beträgt ungefähr 40 W.

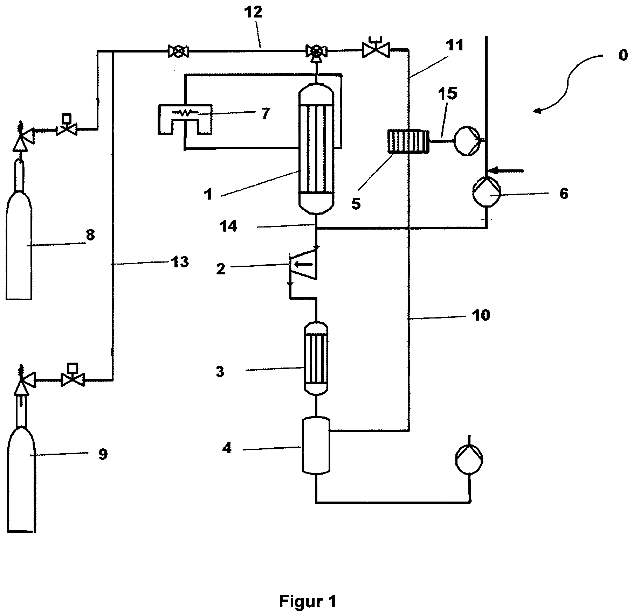

Ebenfalls Gegenstand der Erfindung ist eine bevorzugte Anlage, wie in **Figur 1** dargestellt, der stromabwärts des Reaktors 1 ein Verdichter 2 zur Erhöhung des Drucks der resultierenden Phase zugeordnet ist, insbesondere ist der Verdichter 2 zwischen dem Reaktor 1 und der Membran 5 vorgesehen. Dieser Verdichter erhöht den Druck der resultierenden Phase nach Austritt aus dem Reaktor von etwa 60 mbar_{abs.} auf 2,5 bar_{abs.}. Die verdichtete resultierende Phase wird anschließend über einen stromabwärts angeordneten Kondensator geleitet, um das gebildete Disilan und/oder Trisilan zu kondensieren, während nicht umgesetztes Monosilan und Wasserstoff in der Gasphase verbleiben.

Somit umfasst eine besonders bevorzugte Anlage 0 gemäß **Figur 1** stromabwärts des Reaktors 1 einen Verdichter 2, dem ein Kondensator 3 zugeordnet ist und dem Kondensator 3 ist stromabwärts ein Rohproduktablass 4 oder Rohproduktbehälter 4 zugeordnet. Weiter ist stromabwärts des Kondensators 3, insbesondere an oder hinter dem Produktbehälter 4, die Membran 5 zur Einstellung des Wasserstoffpartialdrucks der resultierenden Phase vorgesehen. Die resultierende Phase wird mit der Membran 5 in Kontakt gebracht und anschließend ein Eduktstoffstrom erhalten, der mittels einer Leitung 11, die stromaufwärts dem Reaktor zugeordnet ist, in den Reaktor überführt. Diesem Eduktstoffstrom kann weiteres Monosilan aus der Monosilanquelle 9 zudosiert werden, um entweder den Gehalt an Monosilan in Vol.-% einzustellen oder auch den Druck des Eduktstoffstroms zu regulieren. Eine Vakuumpumpe 6, die dem Reaktor zugeordnet ist, kann zum Anfahren des Verfahrens und zur Regulierung des Druckes während der laufenden Umsetzung genutzt werden.

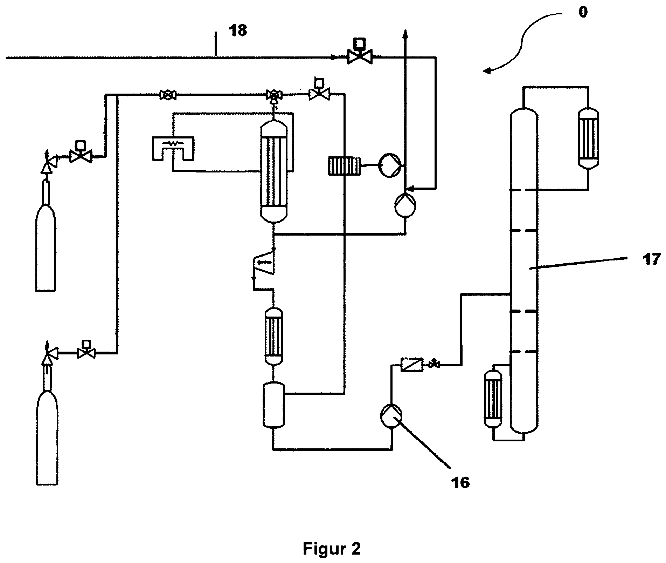

In einer bevorzugten Ausführungsform, die in **Figur 2** dargestellt ist, schließt sich an den Rohproduktbehälter bzw. den Rohproduktablass eine Kolonne 17, vorzugsweise eine Rektifikationskolonne, zur fraktionierten Destillation des Rohproduktgemisches an. Sofern sinnvoll kann der Kolonne eine Produktförderpumpe vorgeschaltet sein. Am Kolonnenkopf können als Leichtsieder höchstreines Disilan und am Sumpf höchstreines Trisilan als Schwersieder erhalten werden.

Eine besonders bevorzugte Anlage weist eine Anordnung der vorgenannten Anlagenteile auf, um die Durchführung eines Kreisprozesses des vorstehend genannten Verfahrens zu ermöglichen. In dieser Anlage ist dem Reaktor 1 stromabwärts ein Verdichter 2 zugeordnet, wie in **Figur 1** dargestellt. Dem Verdichter ist ein Kondensator 3 zugeordnet und stromabwärts des Kondensators 3 weist die Anlage die Wasserstoff durchlässige Membran 5 auf, wobei der einen Seite der Membran 5 und dem Reaktor 1 eine Leitung 12 zugeordnet ist, ferner ist stromabwärts des Kondensators 3 ein Produktablass 4 oder Produktbehälter 4 vorgesehen; und auf der anderen Seite der Membran 5 wird ausgeschleuster Wasserstoff durch eine weitere Leitung 15 abgeführt, dem eine Intergasleitung zur Wasserstoffabtrennung zugeordnet sein kann.

Das folgende Beispiel erläutert das erfindungsgemäße Verfahren näher.

### Beispiel 1:

Monosilan wird kontinuierlich aus einer Druckgasflasche 9 mittels einer Druckregelung über die Eduktzuführung 12 in den Reaktor 1 verdampft und über eine Gasentladungstrecke mit Dielektrikum geführt. Das nicht-thermische Plasma wird im Reaktor bei - 10 °C und bei 60 mbar_{abs.} betrieben. Die selektive Anregung der Si-H Bindung des Monosilans im Eduktstoffstrom aus 10 Vol.-% Monosilan und 90 Vol.-% Wasserstoff erfolgt unter Bildung von Silylradikalen, die zu Disilan oder Trisilan abreagieren und die resultierende Phase bilden. Nach Erhöhen des Drucks der resultierenden Phase auf etwa 2,5 bar_{abs}. wird sie über einen auf circa 0 °C gekühlten Kondensator 3 geleitet, um Disilan und Trisilan zu kondensieren, die in den auf - 40 °C temperierten Rohproduktbehälter 4 ablaufen können. Die verbleibende gasförmige resultierende Phase wird über eine Leitung 10 an einer Seite der Membran 5 vorbeigeführt. Wasserstoff der resultierenden Phase diffundiert durch die Membran 5 und kann über die Leitung 15 abgeführt werden. An der Membran wird in der resultierenden Phase ein definiertes Verhältnis des Wasserstoffpartialdrucks zum Partialdruck des unter den gewählten Bedingungen gasförmigen Monosilans eingestellt. Durch diese Massnahme wird aus der resultierenden Phase ein Eduktstoffstrom der erneut der Gasentladungsstrecke mit Dielektrikum im Reaktor, ggf. nach Zudosierung weiteren Monosilans, zugeführt wird.

Im Rohproduktbehälter wird Disilan im Gemisch mit einem Anteil an Trisilan angereichert, die von der Produktpumpe 16 zur Destillationskolonne 17 gepumpt werden, um dort fraktioniert destilliert zu werden.

Durch kontinuierliche, fraktionierte Destillation wurden höchstreines Disilan als Leichtsieder am Kopf der Kolonne 17 und Trisilan als Schwersieder am Sumpf der Kolonne abgezogen.

Die generelle Verfahrensführung des Beispiels 1 ist nicht beschränkt auf die konkret genannten Verfahrensparameter, sondern kann entsprechend der Beschreibung verallgemeinert werden.

Die **Figur 1** und **Figur 2** zeigen eine schematische Darstellung einer erfindungsgemäßen Anlage 0 zur Durchführung des erfindungsgemäßen Verfahrens.

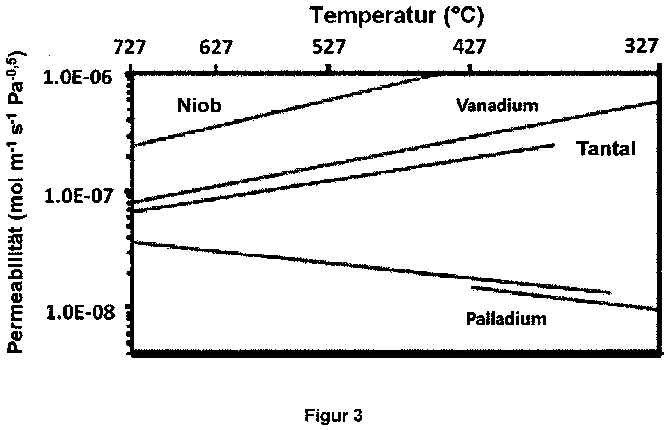

**Figur 3** zeigt eine Darstellung der Wasserstoffpermeabilität verschiedener Membranmaterialien.

### Bezugszeichenliste:

- 0: Anlage
- 1: Reaktor
- 2: Verdichter
- 3: Kondensator
- 4: Rohproduktablass oder Rohproduktbehälter
- 5: Membran
- 6: Vakuumpumpe
- 7: Umrichter für Plasmaerzeugung
- 8: Wasserstoffquelle - Anfahren des Verfahrens
- 9: Monosilanquelle
- 10: Leitung/resultierende Phase
- 11: Leitung/Eduktzuführung
- 12: Leitung/Eduktzuführung
- 13: Leitung/Monosilan
- 14: Leitung/resultierende Phase
- 15: Leitung/Wasserstoff
- 16: Produktförderpumpe
- 17: Kolonne - fraktionierte Destillation
- 18: Leitung - Inertgas zur Wasserstoffabtrennung

## Patentansprüche

1. Verfahren zur Herstellung von dimeren und/oder trimeren Silanen der allgemeinen Formel I 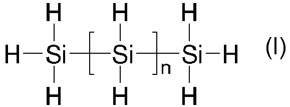 mit n = 0 oder 1,
indem
i) ein Eduktstoffstrom umfassend Monosilan der allgemeinen Formel II 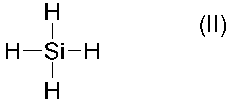 und Wasserstoff, wobei der Eduktstrom ein definiertes Verhältnis an Wasserstoff und Monosilan in Volumenprozent (Vol.-%) von 15 : 1 bis 1 : 5 aufweist,
ii) einer Gasentladung ausgesetzt wird und
iii) dimere und/oder trimerer Silane der Formel I aus der resultierenden Phase gewonnen werden,
und in der resultierenden Phase ein definiertes Verhältnis des Wasserstoffpartialdrucks zum Partialdruck der unter den gewählten Bedingungen gasförmigen Silane mittels einer Wasserstoff durchlässigen Membran eingestellt wird.

2. Verfahren nach Anspruch 1,
**dadurch gekennzeichnet,**
**dass** der Druck im Verfahrensschritt iii) gegenüber dem Druck in Verfahrensstufe ii) erhöht ist.

3. Verfahren nach einem der Ansprüche 1 oder 2,
**dadurch gekennzeichnet,**
**dass** im Verfahrensschritt iii) die resultierende Phase einen Druck von 1 bar_{abs.} bis 100 bar_{abs.} aufweist.

4. Verfahren nach einem der Ansprüche 1 bis 3,
**dadurch gekennzeichnet,**
**dass** im Verfahrensschritt ii) das Monosilan in Gegenwart von Wasserstoff bei einem Druck zwischen 0,05 mbar_{abs.} bis 15000 mbar_{abs.}, vorzugsweise bei vermindertem Druck, der Gasentladung ausgesetzt wird.

5. Verfahren nach einem der Ansprüche 1 bis 4
**dadurch gekennzeichnet,**
**dass** im Verfahrensschritt ii) die Gasentladung bei einem Druck zwischen zwischen 0,1 mbar_{abs.} bis 1000 mbar_{abs.} erfolgt, besonders bevorzugt zwischen 1 mbar_{abs.} bis 100 mbar_{abs.}

6. Verfahren nach einem der Ansprüche 1 bis 5,
**dadurch gekennzeichnet,**
**dass** im Verfahrensschritt ii) die Gasentladung bei einer Temperatur zwischen - 60 °C und 10 °C erfolgt.

7. Verfahren nach einem der Ansprüche 1 bis 6,
**dadurch gekennzeichnet,**
**dass** der Eduktstoffstrom in Schritt ii) einem nicht-thermischen Plasma ausgesetzt wird.

8. Verfahren nach Anspruch 1,
**dadurch gekennzeichnet,**
**dass** die Membran für Wasserstoff permeabel ist und im Wesentlichen für Silane nicht permeabel ist.

9. Verfahren nach Anspruch 1 oder 8,
**gekennzeichnet durch**,
eine Membran umfassend die folgenden Materialien: Quarz, Metall, metallische Legierung, Keramik, Zeolith, organisches Polymer und/oder eine Kompositmembran mit einem mindestens zweischichtigen Aufbau umfassend ein oder mehrere der vorgennannten Materialien.

10. Anlage (0) zur Durchführung des Verfahrens nach einem der Ansprüche 1 bis 9, **dadurch gekennzeichnet, dass**
sie einen Reaktor (1) zur Erzeugung einer Gasentladung aufweist, dem stromaufwärts eine Eduktzuführung (12) und stromabwärts eine Wassersstoff durchlässige Membran (5) zugeordnet ist, um ein definiertes Verhältnis des Wasserstoffpartialdrucks zum Partialdruck der gasförmigen Silane in der resultierenden Phase einzustellen.

11. Anlage (0) nach Anspruch 10, **dadurch gekennzeichnet, dass**
stromabwärts des Reaktors (1) ein Verdichter (2) zur Erhöhung des Drucks der resultierenden Phase zugeordnet ist, insbesondere ist der Verdichter (2) zwischen dem Reaktor (1) und der Membran (5) vorgesehen.

12. Anlage (0) nach Anspruch 10 oder 11, **dadurch gekennzeichnet, dass**
sie stromabwärts des Reaktors (1) einen Verdichter (2) aufweist, dem ein Kondensator (3) zugeordnet ist und dem Kondensator (3) stromabwärts ein Rohproduktablass (4) oder Rohproduktbehälter (4) zugeordnet ist, stromabwärts des Kondensators (3) ist die Membran (5) zur Einstellung des Wasserstoffpartialdrucks der resultierenden Phase durch in Kontaktbringen der resultierenden Phase mit der Membran (5) angeordnet, wodurch ein Eduktstoffstrom erhalten wird, der mittels einer Leitung (11) in den Reaktor (1) überführt wird.

13. Anlage (0) nach einem der Ansprüche 10 bis 12 mit einer Anordnung zur Durchführung eines Kreisprozesses des Verfahrens nach einem der Ansprüche 1 bis 9, **dadurch gekennzeichnet, dass** dem Reaktor (1) stromabwärts ein Verdichter (2) zugeordnet ist, und dem Verdichter ein Kondensator (3) zugeordnet ist, stromabwärts des Kondensators (3) weist die Anlage die wasserstoffdurchlässige Membran (5) auf, wobei der einen Seite der Membran (5) und dem Reaktor (1) eine Leitung (12) zugeordnet ist, ferner ist stromabwärts des Kondensators (3) ein Produktablass (4) oder Produktbehälter (4) vorgesehen; und auf der anderen Seite der Membran (5) wird ausgeschleuster Wasserstoff abgeführt (15).

## Claims

1. Process for preparing dimeric and/or trimeric silanes of the general formula I 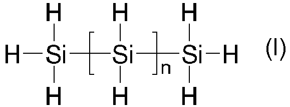 where n = 0 or 1,
by
i) subjecting a reactant stream comprising monosilane of the general formula II 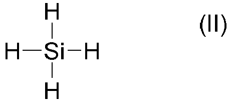 and hydrogen, where the reactant stream has a defined ratio of hydrogen and monosilane in per cent by volume (% by vol.) of 15:1 to 1:5,
ii) to a gas discharge and
iii) obtaining dimeric and/or trimeric silanes of the formula I from the resulting phase,
and setting a defined ratio of the partial hydrogen pressure to the partial pressure of the silanes which are gaseous under the conditions selected in the resulting phase by means of a hydrogen-permeable membrane.

2. Process according to Claim 1,
**characterized in that**
the pressure in process step iii) is elevated relative to the pressure in process stage ii).

3. Process according to either of Claims 1 and 2,
**characterized in that**
the resulting phase in process step iii) has a pressure of 1 bar_{abs.} to 100 bar_{abs.}.

4. Process according to any of Claims 1 to 3,
**characterized in that**
the monosilane in process step ii) is subjected to the gas discharge in the presence of hydrogen at a pressure between 0.05 mbar_{abs.} and 15 000 mbar_{abs.}, preferably under reduced pressure.

5. Process according to any of Claims 1 to 4,
**characterized in that**
the gas discharge in process step ii) is effected at a pressure between 0.1 mbar_{abs.} and 1000 mbar_{abs.}, more preferably between 1 mbar_{abs.} and 100 mbar_{abs.}.

6. Process according to any of Claims 1 to 5,
**characterized in that**
the gas discharge in process step ii) is effected at a temperature between -60°C and 10°C.

7. Process according to any of Claims 1 to 6,
**characterized in that**
the reactant stream in step ii) is exposed to a nonthermal plasma.

8. Process according to Claim 1,
**characterized in that**
the membrane is permeable to hydrogen and essentially impermeable to silanes.

9. Process according to Claim 1 or 8,
**characterized by**
a membrane comprising the following materials: quartz, metal, metallic alloy, ceramic, zeolite, organic polymer and/or a composite membrane having an at least two-layer structure comprising one or more of the aforementioned materials.

10. Plant (0) for performance of the process according to any of Claims 1 to 9, **characterized in that**
it has a reactor (1) for generation of a gas discharge, with a dedicated upstream reactant feed (12) and downstream hydrogen-permeable membrane (5), in order to set a defined ratio of the partial hydrogen pressure to the partial pressure of the gaseous silanes in the resulting phase.

11. Plant (0) according to Claim 10, **characterized in that**
the reactor (1) has a dedicated downstream compressor (2) to increase the pressure of the resulting phase, the compressor (2) more particularly being provided between the reactor (1) and the membrane (5).

12. Plant (0) according to Claim 10 or 11, **characterized in that**
it has a compressor (2) downstream of the reactor (1), with a condenser (3) dedicated to said compressor (2) and a downstream crude product outlet (4) or crude product vessel (4) dedicated to said condenser (3), downstream of which is disposed the membrane (5) for setting the partial hydrogen pressure of the resulting phase by contacting of the resulting phase with the membrane (5), which gives a reactant stream which is transferred by means of a line (11) into the reactor (1).

13. Plant (0) according to any of Claims 10 to 12 having an arrangement for performance of a cycle operation of the process according to any of Claims 1 to 9, **characterized in that** the reactor (1) has a dedicated downstream compressor (2), and said compressor has a dedicated condenser (3), and the plant has the hydrogen-permeable membrane (5) downstream of the condenser (3), with a line (12) dedicated to one side of the membrane (5) and to the reactor (1), and a product outlet (4) or product vessel (4) is also provided downstream of the condenser (3); and discharged hydrogen is removed (15) on the other side of the membrane (5).

## Revendications

1. Procédé pour la production de silanes dimères et/ou trimères de formule générale I 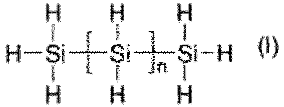 où n = 0 ou 1,
par
i) exposition d'un courant de produits de départ comprenant un monosilane de formule générale (II) 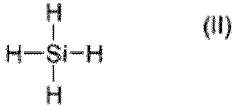 et de l'hydrogène, le courant de produits de départ présentant un rapport défini d'hydrogène et de monosilane en pour cent en volume (% en volume) de 15 : 1 à 1 : 5,
ii) à une décharge gazeuse et
iii) obtention de silanes dimères et/ou trimères de formule I à partir de la phase résultante,
et ajustement dans la phase résultante d'un rapport défini de la pression partielle d'hydrogène à la pression partielle des silanes gazeux dans les conditions choisies, au moyen d'une membrane perméable à l'hydrogène.

2. Procédé selon la revendication 1,
**caractérisé en ce que**
la pression dans l'étape iii) du procédé est élevée par rapport à la pression dans l'étape ii) du procédé.

3. Procédé selon l'une quelconque des revendications 1 et 2,
**caractérisé en ce que**
dans l'étape iii) du procédé la phase résultante présente une pression de 1 bar_{abs.} À 100 bars_{abs.}.

4. Procédé selon l'une quelconque des revendications 1 à 3,
**caractérisé en ce que**
dans l'étape ii) du procédé on expose à la décharge gazeuse le monosilane en présence d'hydrogène sous une pression comprise entre 0,05 mbar_{abs.} et 15 000 mbars_{abs.}, de préférence sous pression réduite.

5. Procédé selon l'une quelconque des revendications 1 à 4,
**caractérisé en ce que**
dans l'étape ii) du procédé la décharge gazeuse à lieu sous une pression comprise entre 0,1 mbar_{abs.} et 1 000 mbars_{abs.}, de façon particulièrement préférée entre 1 mbar_{abs.} et 100 mbars_{abs.}.

6. Procédé selon l'une quelconque des revendications 1 à 5,
**caractérisé en ce que**
dans l'étape ii) du procédé la décharge gazeuse a lieu à une température comprise entre -60 °C et 10 °C.

7. Procédé selon l'une quelconque des revendications 1 à 6,
**caractérisé en ce que**
dans l'étape ii) on expose le courant de produits de départ à un plasma non thermique.

8. Procédé selon la revendication 1,
**caractérisé en ce que**
la membrane est perméable à l'hydrogène et est essentiellement non perméable aux silanes.

9. Procédé selon la revendication 1 ou 8, **caractérisé par**
une membrane comprenant les matériaux suivants : quartz, métal, alliage métallique, céramique, zéolithe, polymère organique et/ou une membrane composite à structure au moins bicouche comprenant un ou plusieurs des matériaux précités.

10. Installation (0) destinée à la mise en oeuvre du procédé selon l'une quelconque des revendications 1 à 9, **caractérisée en ce**
**qu'**elle comporte un réacteur (1) destiné à engendrer une décharge gazeuse, auquel est affecté en amont un conduit d'alimentation en produits de départ (12) et est affectée en aval une membrane perméable à l'hydrogène (5), pour ajuster dans la phase résultante un rapport défini de la pression partielle d'hydrogène à la pression partielle des silanes gazeux.

11. Installation (0) selon la revendication 10, **caractérisée en ce**
**qu'**en aval du réacteur (1) un compresseur (2) est affecté à l'augmentation de la pression de la phase résultante, en particulier le compresseur (2) est prévu entre le réacteur (1) et la membrane (5).

12. Installation (0) selon la revendication 10 ou 11, **caractérisée en ce**
**qu'**elle comporte en aval du réacteur (1) un compresseur (2) auquel est affecté un condenseur (3) et au condenseur (3) est affecté en aval un conduit de décharge de produit brut (4) ou récipient collecteur de produit brut (4), en aval du condenseur (3) la membrane (5) est affectée à l'ajustement de la pression partielle d'hydrogène de la phase résultante par mise en contact de la phase résultante avec la membrane (5), de sorte qu'on obtient un courant de produits de départ qui est transféré dans le réacteur (1) au moyen d'un conduit (11).

13. Installation (0) selon l'une quelconque des revendications 10 à 12, comportant un dispositif destiné à la mise en oeuvre d'un processus en cycle fermé du procédé selon l'une quelconque des revendications 1 à 9, **caractérisée en ce qu'**au réacteur (1) est affecté en aval un compresseur (2), et au compresseur est affecté un condenseur (3), en aval du condenseur (3) l'installation comporte la membrane perméable à l'hydrogène (5), un conduit (12) étant affecté à un côté de la membrane (5) et au réacteur (1), de plus en aval du condenseur (3) est prévu un conduit de décharge de produit (4) ou récipient collecteur de produit (4) ; et l'hydrogène expulsé est évacué (15) de l'autre côté de la membrane (5) .
